# EUROPEAN PATENT SPECIFICATION

(11) **EP 2 007 578 B1**
(45) Date of publication and mention of the grant of the patent: **09.10.2013**
(21) Application number: 07730660.3
(22) Date of filing: 28.03.2007
(51) Int. Cl.: B32B 33/00, H05B 6/68, G01K 3/04, G09F 3/02

(54) **INDICATOR, METHOD OF MANUFACTURING THEREOF AND METHOD OF INDICATING A PREDETERMINED TEMPERATURE FOR A THERMOACTIVE SUBSTANCE**
ANZEIGE, HERSTELLUNGSVERFAHREN DAFÜR UND VERFAHREN ZUR ANZEIGE EINER VORBESTIMMTEN TEMPERATUR FÜR EINE THERMOAKTIVE SUBSTANZ
INDICATEUR, PROCEDE DE FABRICATION DE CELUI-CI ET PROCEDE D'INDICATION D'UNE TEMPERATURE PREDETERMINEE POUR UNE SUBSTANCE THERMOACTIVE

(30) Priority: 31.03.2006 FI 20065216
(43) Date of publication of application: 31.12.2008
(73) Proprietor: UPM Raflatac Oy, 33101 Tampere (FI)
(72) Inventor: SAXBERG, Tom, FI-33230 Tampere (FI); KIVINEN, Sami, FI-33820 Tampere (FI)
(74) Representative: Pursiainen, Timo Pekka
(86) International application number: PCT/FI2007/050173
(87) International publication number: WO 2007/113382

(56) References cited:
- EP-A2- 0 495 599
- WO-A1-2005/004543
- GB-A- 2 312 954
- GB-A- 2 327 755
- JP-A- 10 197 362
- JP-A- 2003 144 059
- US-A- 4 065 655
- US-A- 4 933 525

## Description

### Field of Invention

This invention relates to indicating temperature of food heated by microwave radiation.

### Background of the Invention

Microwave ovens are used generally to heat different substances. At households in addition to heating foodstuffs and food portions they are also used in cooking. The substance heating effect of the microwaves is based on the vibration of the water molecules in the substance, such as food. The magnetron in the microwave oven generates microwaves also know as the electromagnetic radiation, which has the frequency of 2450 MHz. In this frequency the energy of microwaves is absorbed efficiently into water molecules of the thermoactive substance, which will start to vibrate very rapidly. The vibration heats the water, and the heat moves gradually into the other elements of the warmed substance.

The problem of heating in the microwave oven is that it is usually difficult to reach a suitable, desirable end temperature for the substance as a result of the heating. A suitable temperature for the substance is generally reached by testing different combinations of heating effect and time. Earlier heating experiments and, for example, guideline values issued by the food producers in food packs may help in this regard, but even so the end temperature of the product may vary significantly in different heating occasions. The heating rate of the product depends not only on the composition and the structure of the product, but also on its quantity and initial temperature. The heating involves also a difficulty in form of different microwave fields generated by different microwave ovens from various manufacturers and of various ages, which will cause variations in the heating rate of the product. It is a particular problem with such products, which require an exact end temperature, such as baby foods.

To eliminate above-mentioned problems a number of different indicators has been disclosed, which will indicate, when the thermoactive product has reached a suitable end temperature. One such indicator has been disclosed in WO publication 2005/004543, in which simultaneously with the thermoactive foodstuff pack a microwave absorbing indicator is placed in the microwave oven, which is absorbing microwaves in a particular ratio to the heatable food and which thereby heats simultaneously with the thermoactive product. The indicator is made of polymeric material, as a polymeric piece, whose heating causes a colour change in a thermosensitive colour pigment arranged for it. The colour change can be visually read, for example, with a separate IR reader. The indicator is fastened on the microwave oven separated from the thermoactive product, so that a generated heat in the heatable food does not heat the indicator. The problem of this solution is a disproportionately large mass of the polymeric piece. Because both the polymeric material heated by the microwave effect and the material changing colour by the temperature effect has been integrated in the same polymeric piece, the mass of a polymeric piece has to be constituted so large that the temperature change caused by its microwave effect is sufficiently reproducible and temperature rise may be moderated controllably to the desired reaction speed. Such an indicator is also difficult to manufacture.

Another indicator to show a suitable temperature of a thermoactive product is disclosed in European Patent 272 089. This indicator changes its colour, when a temperature of a foodstuff pack to which the indicator is fastened rises enough. The indicator has a metal layer directly in contact with the surface of the foodstuff pack, and the layer temperature will rise, when the microwaves heat the food in the foodstuff pack. On top of the metal layer there is a colourant layer, which has been covered with the surface layer. Normally the surface layer is opaque, but due to the heat transferred from the metal layer it turns translucent, whereupon the colour layer can be seen through it. The problem of this solution is errors in the indicator functionality caused by the careless treatment of the foodstuff pack. For instance, if the foodstuff pack has a hole or the cover is ajar, vapours formed in the food are emitted from the pack, and do no heat the indicator.

GB2312954A discloses that a thermochromic composition may be applied to a container containing food in order to monitor temperature of the food when the food is heated by microwave radiation.

US 4,933,525 discloses a container having a liquid crystal film. The liquid crystal film is arranged to display temperature of food when the food contained in the container is heated by microwave radiation.

### Short Description of the Invention

Target of the present invention disclosed here is to achieve an indicator, which will avoid above-mentioned problems through which it is easy to notice when the microwave oven thermoactive substance has reached a predetermined, suitable temperature. The indicator will give a visual alarm signal, when thermoactive product's, to which the indicator is fastened, temperature is suitable. The target is also to accomplish a method to produce the before-mentioned indicator. Further target of the invention is to accomplish a method for indicating the predetermined temperature for the thermoactive substance.

According to a first aspect of the invention, there is provided a combination of an indicator and a food package according to claim 1

According to a second aspect of the invention, there is provided a method for manufacturing a food temperature indicator according to claim 4.

According to a third aspect of the invention, there is provided a method for indicating temperature of food according to claim 6.

In other, dependent patent claims there will be disclosed certain preferred embodiments of the invention.

The invention is based on the idea that the indicator includes a microwave absorbing layer, whose temperature will raise due to the microwave effect. Indicator has furthermore a thermosensitive layer. The heat transferred from the microwave absorbing layer heats the thermosensitive layer and causes a colour formation in the thermosensitive layer.

The microwave absorbing layer can be, for instance, paper, film, lacquer, surface coating or printing ink, which includes microwave absorbing material. Preferably the microwave absorbing layer is surface coating or printing ink, which has been applied, pressed or printed to a suitable base layer, such as paper. Surface coating or printing ink can cover the whole base layer or it can be used to form to the base layer different symbols, figures or texts. These figures become visible as a colour zone in the thermosensitive layer as its temperature rises. Physical colour of the microwave absorbing layer is thus not significant as for the invention.

When the surface coating or printing ink is used as the microwave absorbing layer, one of the elements used is a microwave absorbing substance. For instance, the pigment used in it can be the microwave absorbing material. Such materials are among others graphite and different metal powders, including magnetic metals. Ferromagnetic materials, such as Cr02, MnAs, Gd, Dy and EuO can be also used. In addition to these the surface coating or printing ink includes commonly used components, i.e. binders, solvents and possibly auxiliary substances.

A thermosensitive layer in the indicator is, for example, a coating layer formed on a suitable substrate, such as paper or film. The coating layer includes components, which due to the heat react with each other and cause colour formation. Such a coating layer is, for example, in a thermosensitive paper or label. Base paper in the thermosensitive paper has been covered with the thermosensitive surface coating. A thermosensitive surface coating consists of a colourant in addition to a normal coating substance components, i.e. pigments, binders and additives, which colourant is under normal conditions colourless, both from the developer and sensitiser. When a sufficient temperature is directed to the paper, the paper changes its colour. The colour change is caused by the chemical reaction in the coating. Due to the temperature effect the coating changes soluble and chemicals in it get into the contact with each other and react, which results in the colour formation. Printers using thermosensitive paper are equipped with small thermal resistors, which suitably heated produce a desired printing on a paper. In a thermosensitive label on the other side of the base paper there is an adhesive spread, with which the label can be glued on its target.

Colour formation to the thermosensitive layer will thus occur, when temperature of the microwave absorbing layer has risen high enough, so that heat transferred from it is able to generate colour formation reactions for the thermosensitive layer.

The microwave absorbing layer has been formed on top of the base layer. The purpose of the base layer is to function as a substrate and support for the microwave absorbing layer and, in particular, if the indicator is intended to be fastened on the outer surface of the pack including thermoactive substance, to stop the heat transfer from the thermoactive substance to the indicator.

The indicator has been formed so that the colour formation in the thermosensitive layer will occur whenever the temperature of the thermoactive substance is suitable for the end use of the substance. This suitable temperature is predetermined and it varies depending on the thermoactive substance. For instance, in one preferred embodiment of the invention, i.e. Heating food portions, a suitable temperature varies significantly. For instance, food portions intended for adults are generally heated to higher temperature than food portions for the infants.

The temperature of the microwave absorbing layer of the indicator does not necessarily rise to same temperature as in the heatable food, but it can remain significantly lower or rise higher. The level of temperature, where the temperature of the microwave absorbing layer rises in relation to the heatable food, is adjusted by the composition of the microwave absorbing layer, in particular by choice and quantity of its microwave absorbing element. Also the thickness and geometry of the microwave absorbing layer, or possible patterning and division into parts affect its temperature. By alternating the microwave absorbing element of the microwave absorbing layer and by changing its layer composition the reaction speed and temperature dependence of the indicator can be adjusted. Microwave absorbing layer of the indicator may be formed from a number of materials absorbing microwaves differently, which will generate a nonsimultaneous colour formation in the thermosensitive layer in different zones of it.

Between the microwave absorbing and thermosensitive layer an interlayer can be formed, if desired. Interlayer is a heat conductive or insulating layer, by which the heat transfer rate from the microwave absorbing layer to the thermosensitive layer can be adjusted. By means of an interlayer colour zone formation may be also adjusted in the thermosensitive layer in a direction of the indicator surface. With a suitable choice of the interlayer material, thickness and heat conductivity the time duration in the surface direction of the indicator for the indicator colour change and colour zone formation may be adjusted.

The indicator may be placed anywhere in the microwave oven, preferably it is placed in the vicinity of the thermoactive substance, in which case it absorbs proportionally same a fasten of microwaves as the thermoactive substance. Most conveniently the indicator is fastened to the pack or container of the thermoactive substance or the separate bracket so that the indicator is at the vicinity of the substance. The indicator may also be fastened to the microwave oven proper, inside of it, in a certain position towards the power supply of the microwave oven.

Particularly preferably the indicator is suited to monitor the heating of the foodstuffs and food portions. Colour zone generated onto the indicator surface functions as a visual signal for the cook of the portion stating that the temperature of the food portion is suitable.

The manufacturing of the indicator is very simple. It may be manufactured into an integrated entity, in which case on the other side of the base layer there is an adhesive layer, which has been protected by an abhesive paper, by removing of which the indicator can be fastened into the foodstuff pack. The indicator may be fastened in its position to the pack by the food manufacturer or packer, or the indicator may be a separate indicator, which is fastened into the pack or to the microwave oven by the cook before heating the food in the microwave oven. The indicator may also be manufactured by the sticker manufacturing methods. At its simplest form the indicator may be formed of two self-adhesive labels, one of which includes a thermosensitive layer and the other a microwave absorbing layer, which labels can be connected to each other as an uniform indicator. The indicator may also be manufactured into an integrated entity without having an adhesive layer for fastening the indicator. For such an indicator a separate holder is arranged to the microwave oven and/or pack containing the thermoactive substance.

The advantage of the indicator in accordance with the invention is its ease of use. The indicator is easy to fasten to the microwave oven, either to the inner surfaces of the microwave oven, to product packs, or to the separate holder. Visual signal it is giving, i.e. Monitoring colour changes by the naked eye is easy, and does not require separate equipment. Particularly the common consumer is able to easily follow by means of it the temperature rise of the routinely heatable foodstuffs to a suitable temperature. By means of the invention stopping of the microwave oven and testing of the food temperature is avoided in the middle of its heating.

In addition, the indicator in accordance with the invention is easy to manufacture. Different layers of the indicator can be generated with conventional printing, coating and/or sticker manufacturing methods, no special equipment investments are needed.

The indicator is also reliable. Due to the insulating base layer the heat transferred from the thermoactive substance does not affect the functionality of the indicator. When the indicator is placed into the immediate vicinity of the thermoactive substance, for instance, into the outer surface of the pack or container carrying it, it receives microwaves in the same ratio as the thermoactive substance and outputs an exact message of the temperature rise of the substance to a suitable temperature.

Further, by means of a indicator differences due to different, various power functioning microwave ovens can be avoided in heating substances. Insecurity of the choice for the suitable heating time is also withdrawn.

### Brief Description of the Figures

In the following the invention is disclosed more exactly by referring to the accompanying figures, where
- Figure 1a: illustrates schematically an indicator as a cross-section,
- Figure 1b: illustrates schematically cross-section of self-adhesive labels used in forming the indicator in accordance of the Figure 1a,
- Figure 2a: illustrates schematically cross-section of another indicator,
- Figure 2b: illustrates schematically cross-section of self-adhesive labels used in forming the indicator in accordance of the Figure 2a,
- Figure 3: illustrates schematically cross-section of an indicator fastened to the pack of the thermoactive substance/product,
- Figure 4a: illustrates an indicator seen from above and
- Figures 4b, 4c and 4d: illustrate another indicator seen from above.

### Detailed Description of the Invention

In this description 'microwave oven' refers not only to the microwave oven used in conjunction with conventional cooking and heating, but also to other devices, where microwave radiation is directed to the substance and the heating of substance is achieved.

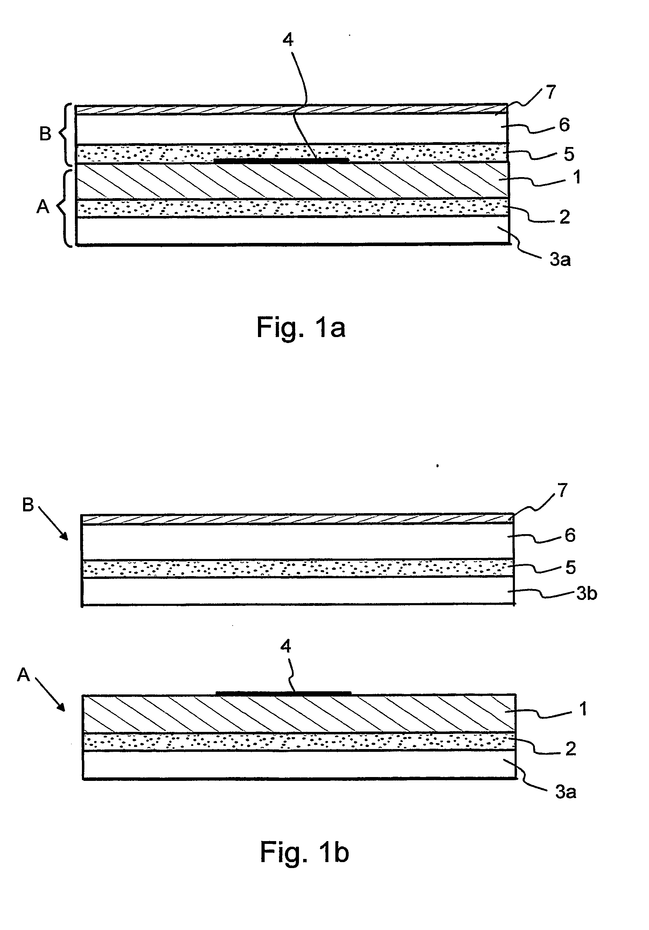

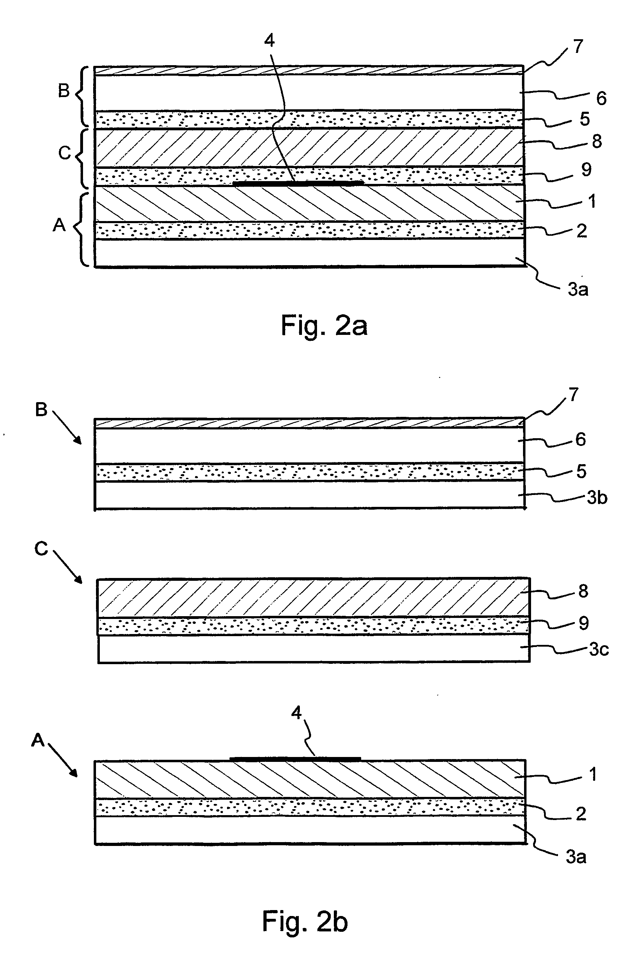

In the following description in Figures 1a - 3 illustrating thicknesses of the layers forming the indicator are illustrated for the sake of clarity largely exaggerated. In Figures 1a and 2a the indicator is illustrated at the state, in which it is not yet fastened to the pack of the product to-be-monitored.

Figure 1a illustrates a cross-section of an indicator. The indicator has a base layer 1, on the other side of which is a first adhesive layer 2, onto which are fastened a separable backing paper 3a. On the other side of the base layer 1 is a microwave absorbing layer 4, which in this embodiment is formed to only on the part of the base layer 1 area. The microwave absorbing layer is, for example, a printing ink absorbing microwaves, which has been printed to the base layer surface. To the other side of the microwave absorbing layer 4, and also to the outside surface of the microwave absorbing layer 4 of the base layer 1 is formed a second adhesive layer 5, which will connect the substrate 6 in contact with it to the indicator. A thermosensitive coating layer 7 is formed to the other side of the substrate 6. As a substrate, paper or film can be used.

Figure 2a illustrates a cross-section of another indicator. In this embodiment between the microwave absorbing layer 4 and the outside surface of the base layer 1 of the microwave absorbing layer 4 as well as the substrate 6 an interlayer 8 is arranged. The interlayer 8 is fastened to the microwave absorbing layer 4, and also to the outside surface of the microwave absorbing layer 4 of the base layer 1 by means of a second adhesive layer 9. The interlayer 8 is fixed to the substrate 6 by means of a third adhesive layer 5. Other parts of the first element are in identical to illustrated elements of figure 1a. Interlayer 8 is not necessary in the indicator functionality and, if desired, it can be excluded.

Thickness, area, form and the chosen microwaves absorbing element of the microwave absorbing layer affect the heating rate of the microwave absorbing layer and hence the time required for colour formation reactions in the thermosensitive layer. In the following table effects of different variables of the microwave absorbing layer are presented regarding the colour formation of the thermosensitive layer and thus also the reaction speed of the indicator.

**Table 1**

| **Microwave absorbing Layer (MAL) change** | **Colour formation speed of thermosensitive layer** |
|---|---|
| Increasing MAL area (formed on the substrate) | Increases |
| Increasing thickness | Increases |
| Increasing microwave absorbing material content in MAL | Increases |
| Dividing MAL into smaller parts | Becomes slower |
| Increasing thickness of other layers of the indicator | Becomes slower |
| Using a material with a low Curie temperature as a microwave absorbing material | Becomes slower |

When these variables are taken into account when manufacturing the indicator, a suitable and timely reacting indicator can be generated for each thermoactive target. By means of material, thickness and heat conductivity of the interlayer the reaction speed of the indicator may also be adjusted.

As a microwave radiation absorbing element used in the microwave absorbing layer graphite, different metal powders and magnetic metals can be used. If ferromagnetic materials are used, chromium oxide (CrO2), manganese arsenic (MnAs), Gadolinium (Gd), dysprosium (Dy) and europium oxide (EuO) are suitable materials. As indicators intended for food heating CrO2, MnAs and Gd are suited particularly well because their Curie temperatures, which are 386, 318 and 292 K, are within a suitable range for this purpose. By using these materials for the microwave absorbing element of the microwave absorbing layer, the reaction speed of the indicator can be adjusted to become slower.

For each thermoactive substance there is a predetermined, suitable temperature. Regarding the food portion this temperature is a suitable food consumption temperature, for example, 70 °C. The temperature of the microwave absorbing layer of the indicator does not necessarily be the same as the one of the thermoactive substance, but it can be lower or higher. The indicator temperature, however, is in a certain ratio to the temperature of the thermoactive substance. This temperature is adjusted by the before-mentioned variables of the microwave absorbing layer. It is essential that the indicator gives a right signal, whenever the thermoactive substance has reached a beforehand specified temperature.

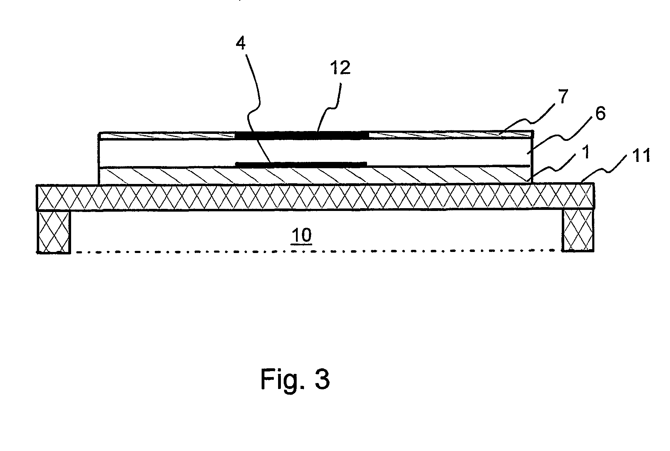

Figure 3 illustrates a cross-section of an indicator in accordance with figure 1a, which has been fastened to one outer surface 11 of the pack containing the thermoactive substance. Backing paper 3a is removed and the indicator is fastened by means of a first adhesive layer 2 to the surface 11. First and second adhesive layers 2 and 5 are not illustrated in the figure. When the thermoactive substance and at the same time the indicator are subjected to the microwave radiation, both the thermoactive substance and the microwave absorbing layer 4 absorb it, in which case the temperatures of the substance and layer 4 rise. Base layer 1 functions as an insulating layer and prevents a heat transfer from the surface of the pack to the indicator. The heat transferred from the microwave absorbing layer raises the temperature of a thermosensitive layer 7 and when the temperature is high enough, it causes reactions of the components of the thermosensitive layer 7 on the substrate 6 and also colour formation and colour zone 12 formation in the thermosensitive layer.

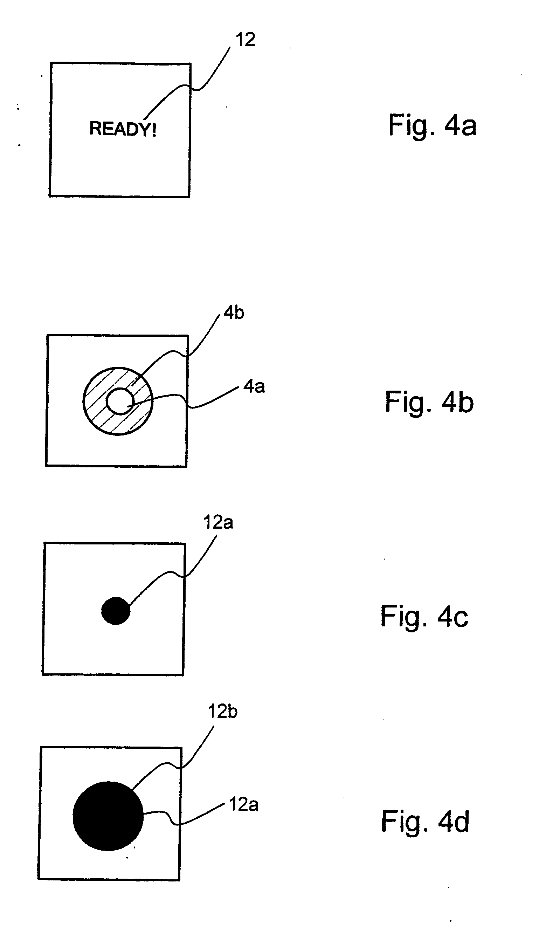

The form of colour zone formed as a result of the colour formation in the thermosensitive layer 7, i.e. The form of figure or text conforms to the form of the figure of the microwave absorbing layer formed by coating, pressing or printing. The colour of thermosensitive layer thus changes at least partially. If desired, the microwave absorbing layer 4 can be formed to cover also the whole base layer 1 area. The figure may be a symbol or a text, such as figures 4a - 4d illustrate. In Figure 4a it is printed a text READY! in the microwave absorbing layer 4, which will emerge as a text colour zone 12 in the thermosensitive layer, when the heatable food has reached a suitable temperature.

Figures 4b - 4d illustrate an embodiment, where the microwave absorbing layer is formed of two materials that absorb the microwaves differently from each other, which heat the thermosensitive layer at different rate. In this case, a person heating a substance, such as a food portion, may follow heating of the food. Figure 4b illustrates an indicator, which has not yet been subject to the microwave radiation. The microwave absorbing layer 4 is formed of a figure, containing a first figure zone 4a, which includes microwave absorbing material, whose temperature will rise rapidly when it absorbs the microwave radiation. The first figure zone is surrounded by a second figure zone 4b, containing microwave absorbing material selected so that its temperature rises slower than the temperature of the material contained in the first figure zone. Once the indicator has been fastened to the foodstuff pack, and has been subjected to the microwave radiation, in the thermosensitive layer a colour zone 12a corresponding to a first figure zone 4a of the microwave absorbing layer emerges after a while, once the substance has reached a certain temperature. When the microwave radiation exposure continues, in the thermosensitive layer also a colour zone 12b corresponding to a second figure zone 4b of the microwave absorbing layer emerges. Naturally, figure zones may be also formed of text completely or partially. If desired, it is possible to include a descriptive scale of the colour formation in the indicator, the scale containing an indication of the colour formation progress and in which temperature rise of the substance can be visually noticed.

An indicator functioning according to figures 4b - 4d may be also formed by using only one microwave absorbing material in the microwave absorbing layer. In this case to the indicator it is arranged such an interlayer 8, which isolates microwaves from the thermosensitive coating layer of the absorbing layer to the extent that the expansion of colour zone in a direction of the indicator surface as the heating continues is possible. Direction of the indicator surface signifies an outer surface direction of the indicator extending away from the thermoactive target. When the indicator is subjected to the microwave radiation, first emerges a colour zone 12a corresponding to a figure zone 4a. When the microwave radiation exposure continues, the colour zone expands in the direction of the indicator surface level, and in the thermosensitive layer also emerges a colour zone 12b corresponding to a figure zone 4b. The expansion of colour zone in the direction of the indicator surface level therefore does not require that the microwave absorbing layer extends completely over the area of the colour zone formed in the thermosensitive layer. Even a spotlike microwave absorbing layer is sufficient to effect an adequate colour reaction.

As one can realise from the above disclosed facts, the indicator shown in the figures is a self-adhesive label product. The indicator can be manufacture by forming it as an uniform layered element. In this case adhesive layers of the indicator will be formed to different surfaces consisting of paper and film with top sizing or coating techniques and paper or film layers are connected to each other by means of adhesive layers. The microwave absorbing layer has been pressed, printed or formed with coating techniques onto the base layer before gluing the layers to each other. A substrate 6 and a thermosensitive coating layer 7 may, for example, be made of thermosensitive paper. The indicator may also be manufactured separately out of labels manufactured with a normal label manufacturing technology by fastening them to each other.

In the following it is explained an indicator manufacturing out of separate labels in accordance with figures 1a and 2a. Figure 1b illustrates two labels A and B used in forming of the indicator in accordance with figure 1a. The first label A consist of a base layer 1, on the other side of which is a first adhesive layer 2, to which it is fixed a separable backing paper 3a. On the other side of the base layer 1 there is a microwave absorbing layer 4.

The second label B consist of a substrate 6, on the other side of which there is a second adhesive layer 5, to which it has also been fixed a separable backing paper 3b. A thermosensitive coating layer 7 is formed to the other side of the substrate 6. According to an embodiment of the invention as such self-adhesive label including the thermosensitive layer, a thermosensitive label is used. In manufacturing of the indicator in accordance with figure 1a, the backing paper 3b of the second label B is removed and the label is fastened onto the base layer 1 of the first label A.

In the embodiment in accordance with Figure 2b, having disclosed labels used in formation of an indicator in accordance with figure 2a, labels A and B in accordance with the before disclosed example are also used, but a third label C is arranged between them. The third label C consist of an interlayer 8, on the other side of which is a third adhesive layer 9, to which it has also been fixed a separable backing paper 3c. In manufacturing of the indicator in accordance with Figure 2a a backing paper 3c of the third label C is removed and the label C is fixed onto the base layer 1 of the first label A. Hereafter the backing paper 3b of the second label B is removed and the label B is fastened onto the interlayer 8 of the third label C.

The indicator may also be manufactured by overlaying by forming it an uniform layered element by pressing, lacquering and/or seaming without any label adhesive. Fasten it into the microwave oven and/or to the pack containing the thermoactive substance can be performed for example by means of a separate holder.

Naturally, the indicator may be fastened to the pack, which is frozen. When the pack melts and further heated in the microwave oven, from the indicator one can see, when will it be suitably warm. The indicator may be prepared also as such that it first indicates the melting of the substance in the pack and when the heating continues, the temperature rise in the substance to a certain predetermined temperature.

Further aspects of the invention are illustrated by the following examples:

Example 1. A layer structured indicator to indicate a specified, predetermined temperature for a thermoactive substance, which substance is heated by subjecting it to the microwave radiation characterised in that the indicator has
- A microwave absorbing layer (4, 4a, 4b), whose layer temperature will rise due to the microwave radiation effect and
- A thermosensitive layer (7), a colour of which at least partially changes, when the thermoactive substance has reached a predetermined temperature for it, which colour change in the thermosensitive layer (7) occurs as a result of a temperature rise in the microwave absorbing layer (4, 4a, 4b).

Example 2. An indicator according to example 1, characterised in that the indicator has a base layer (1), and the microwave absorbing layer (4, 4a, 4b) is formed to one surface of the base layer (1).

Example 3. An indicator according to example 2, characterised in that the indicator has a base layer (1) to support the microwave absorbing layer (4, 4a, 4b).

Example 4. An indicator according to example 1, characterised in that the indicator has been fastened to the outer surface (11) of the pack containing the thermoactive substance (10).

Example 5. A indicator according to example 2 or 4, characterised in that the indicator has a base layer (1) to isolate the indicator from the pack of the thermoactive substance (10).

Example 6. A indicator according to example 1 or 2, characterised in that the microwave absorbing layer (4, 4a, 4b) is formed to one surface of the base layer (1) in one of the following ways: coating, pressing or printing.

Example 7. An indicator according to example 6, characterised in that the microwave absorbing layer (4, 4a, 4b) is one of the following: a figure or text.

Example 8. An indicator according to example 1, characterised in that the microwave absorbing layer (4, 4a, 4b) includes at least one microwave absorbing element, which has been chosen from the group, which includes following substances: graphite, metals, magnetic metals and ferromagnetic metals.

Example 9. An indicator according to example 8, characterised in that the microwave absorbing element is chromium oxide (CrO2), manganese arsenic (MnAs), gadolinium (Gd), dysprosium (Dy) or europium oxide (EuO).

Example 10. An indicator according to example 1, characterised in that thermosensitive layer (7) includes components, which due to the heat react with each other and cause colour formation and colour zone (12,12a,12b) formation.

Example 11. A indicator according to example 7 or 10, characterised in that the form of the colour zone (12,12a,12b) complies with a form of the microwave absorbing layer (4, 4a, 4b).

Example 12. An indicator according to example 10, characterised in that the colour zone (12,12a,12b) expands in a direction of the indicator surface.

Example 13. An indicator according to example 1, characterised in that the thermosensitive layer (7) is a coating layer (7), which has been formed to a substrate (6).

Example 14. A indicator according to example 1 or 13, characterised in that the thermosensitive layer (7) and the substrate (6) have been formed of thermosensitive paper.

Example 15. An indicator according to example 1, characterised in that the indicator has an interlayer (8), which has been arranged between the microwave absorbing layer (4, 4a, 4b) and thermosensitive layer (7).

Example 16. An indicator according to any of the previous examples 1 - 15, characterised in that the indicator has been is formed by overlaying.

Example 17. An indicator according to any of the previous examples 1 - 15, characterised in that the indicator has been formed of the separate self-adhesive labels (A, B, C).

Example 18. A indicator according to example 6 or 8, characterised in that thickness, area or composition of the microwave absorbing layer (4, 4a, 4b) is selected so that by changing it a formation rate of the colour zone (12, 12a, 12b) to be formed in the thermosensitive layer (7) is adjusted.

Example 19. An indicator according to example 15, characterised in that material, thickness and heat conductivity of the interlayer (8) is selected so that by changing it the effect of the temperature rise in the microwave absorbing layer (4, 4a, 4b) is adjusted to the thermosensitive layer (7).

Example 20. An indicator according to example 1, characterised in that the indicator has been accommodated separately from the pack containing the thermoactive substance (10).

Example 21. A method for manufacturing a layer structured indicator which indicator is used to indicate a specified, predetermined temperature for a thermoactive substance, which substance is subjected to the microwave radiation, characterised in that the indicator is arranged with
- The microwave absorbing layer (4, 4a, 4b), whose layer temperature will rise due to the microwave radiation effect and
- A thermosensitive layer (7), a colour of which at least partially changes when the thermoactive substance has reached a predetermined temperature for it, which colour change in the thermosensitive layer (7) occurs due to the temperature rise of the microwave absorbing layer (4, 4a, 4b).

Example 22. A method according to example 21, characterised in that the indicator is arranged arrange with a base layer (1) and the microwave absorbing layer (4, 4a, 4b) is formed to one surface of the base layer (1).

Example 23. A method according to example 21, characterised in that the indicator is arranged with a base layer (1) to isolate the indicator from the pack of the thermoactive substance (10).

Example 24. A method according to example 21 or 22, characterised in that the microwave absorbing layer (4, 4a, 4b) is formed to one surface of the base layer (1) with one of the following ways: coating, pressing or printing.

Example 25. A method according to example 24, characterised in that the microwave absorbing layer (4, 4a, 4b) is formed to a form, which is one of the following: a figure or text.

Example 26. A method according to example 21, characterised in that to the microwave absorbing layer (4) is arranged at least one microwave absorbing element, which has been selected from the group, which includes following substances: graphite, metals, magnetic metals and ferromagnetic metals.

Example 27. A method according to example 24, characterised in that the microwave absorbing element is chromium oxide (CrO2), manganese arsenic (MnAs), gadolinium (Gd), dysprosium (Dy) or europium oxide (EuO).

Example 28. A method according to example 21, characterised in that to the thermosensitive layer (7) is arranged components, which due to the heat react with each other and cause colour formation and colour zone (12,12a,12b) formation.

Example 29. A method according to example 23 or 24, characterised in that the form of the colour zone (12,12a,12b) complies with a form of the microwave absorbing layer (4, 4a, 4b)

Example 30. A method according to example 29, characterised in that the colour zone (12,12a,12b) expands in a direction of the indicator surface.

Example 31. A method according to example 21, characterised in that the thermosensitive layer (7) is a coating layer (7), which is formed to a substrate (6).

Example 32. A method according to example 21 or 31, characterised in that the thermosensitive layer (7) and the substrate (6) are formed of the thermosensitive paper.

Example 33. A method according to example 21, characterised in that the indicator is arranged with a interlayer (8) between the microwave absorbing layer (4, 4a, 4b) and thermosensitive layer (7).

Example 34. A method according to any of the previous examples 21 - 33, characterised in that indicator is formed by overlaying.

Example 35. A method according to any of the previous examples 21 - 33, characterised in that the indicator is formed with separate self-adhesive labels (A, B, C).

Example 36. A method according to example 24 or 26, characterised in that thickness, area or composition of the microwave absorbing layer (4, 4a, 4b) are selected so that by changing it a formation rate of the colour zone (12, 12a, 12b) to be formed in the thermosensitive layer (7) is adjusted.

Example 37. A method according to example 33, characterised in that material, thickness and heat conductivity of the interlayer (8) are selected so that by changing it the effect of the temperature rise in the microwave absorbing layer (4, 4a, 4b) is adjusted to the thermosensitive layer (7).

Example 38. A method according to example 21, characterised in that to the other side of the base layer (1) a first adhesive layer (2) is formed, with which the indicator is fastened to the outer surface (11) of the pack containing the thermoactive substance (10).

Example 39. A method according to example 21, characterised in that into the microwave oven and/or to the pack containing the thermoactive substance (10) is arranged a separate holder, to which the indicator is placed separately from the pack containing the thermoactive substance (10).

Example 40. A method for indicating the temperature for the thermoactive substance, which substance is heated by subjecting it to the microwave radiation and in which method in the vicinity of thermoactive substance there is arranged an indicator characterised in that the indicator has
- The microwave absorbing layer (4, 4a, 4b) whose layer temperature will rise due to the microwave radiation effect and
- A thermosensitive layer (7), a colour of which at least partially changes when the thermoactive substance has reached a predetermined temperature for it, which colour change in the thermosensitive layer (7) occurs due to the temperature rise of the microwave absorbing layer (4, 4a, 4b).

Example 41. A method according to example 40, characterised in that to the microwave absorbing layer (4, 4a, 4b) is arranged at least one microwave absorbing element, which has been selected from the group, which includes following substances: graphite, metals, magnetic metals and ferromagnetic metals.

Example 42. A method according to example 41, characterised in that the microwave absorbing element is chromium oxide (CrO2), manganese arsenic (MnAs), gadolinium (Gd), dysprosium (Dy) or europium oxide (EuO).

Example 43. A method according to example 40, characterised in that to the thermosensitive layer (7) is arranged components, which due to the heat react with each other and cause colour formation and colour zone (12,12a,12b) formation. Example 44. A method according to example 40, characterised in that the thermosensitive layer (7) is a coating layer (7), which is formed to a substrate (6).

Example 45. A method according to example 40 or 44, characterised in that the thermosensitive layer (7) and the substrate (6) are formed of the thermosensitive paper.

Example 46. A method according to example 40, characterised in that the indicator is arranged with a interlayer (8) between the microwave absorbing layer (4, 4a, 4b) and thermosensitive layer (7).

Example 47. A method according to example 41, characterised in that thickness, area or composition of the microwave absorbing layer (4, 4a, 4b) are selected so that by changing it a formation rate of the colour zone (12, 12a, 12b) to be formed in the thermosensitive layer (7) is adjusted.

Example 48. A method according to example 46, characterised in that material, thickness and heat conductivity of the interlayer (8) are selected so that by changing it the effect of the temperature rise in the microwave absorbing layer (4, 4a, 4b) are adjusted to the thermosensitive layer (7).

Example 49. A method according to example 40, characterised in that the indicator is arranged with a base layer (1) and the microwave absorbing layer (4, 4a, 4b) is formed to one surface of the base layer (1) with one of the following ways: coating, pressing or printing.

Example 50. A method according to example 49, characterised in that the microwave absorbing layer (4, 4a, 4b) is formed to a form, which is one of the following: a figure or text.

Example 51. A method according to example 43 or 50, characterised in that the form of the colour zone (12,12a,12b) complies with a form of the microwave absorbing layer (4, 4a, 4b).

Example 52. A method according to example 51, characterised in that the colour zone (12,12a,12b) expands in a direction of the indicator surface.

Example 53. A method according to example 40, characterised in that to the other side of the base layer (1) a first adhesive layer (2) is formed, with which the indicator is fastened to the outer surface of the pack containing the thermoactive substance (11).

Example 54. A method according to example 40, characterised in that to the microwave oven and/or to the pack containing the thermoactive substance (10) is arranged a separate holder, to which the indicator is placed separately from the pack containing the thermoactive substance (10).

Example 55. A method according to example 40, characterised in that the indicator is arranged with a base layer (1) to isolate the indicator from the pack of the thermoactive substance (10).

The invention is not meant to be limited to embidoments disclosed before as examples, but invention is intended to be applicable comprehensively within the inventive concept of the following patent claims. The indicator can thus be fastened to any surface of the foodstuff pack, or it may be arranged to a separate holder completely separated, but yet in the vicinity of the thermoactive foodstuff pack. The indicator may also be fastened inside the microwave oven, in a certain position towards the power supply of the microwave oven. In this case the indicator can be used for indicating the microwave oven capacity.

## Claims

1. A combination of a package and a temperature indicator fastened to the package, the package containing food (10), the indicator comprising:
- a first layer (7) arranged to change colour when heated to a temperature high enough,
**characterized in that** the indicator further comprises:
- a second layer (4, 4a, 4b) comprising material which absorbs microwave radiation, wherein the second layer (4, 4a, 4b) is arranged to heat said first layer (7) by absorbing microwave radiation, and
- a third layer (1) arranged to thermally insulate the second layer (4, 4a, 4b) from the package when the food (10) and the second layer (4, 4a, 4b) are heated by the microwave radiation.

2. The indicator according to claim 1, **characterised in that** the indicator has been fastened to an outer surface (11) of the package by an adhesive layer (2).

3. The indicator according to claim 1 or 2, **characterised in that** the indicator has an interlayer (8) between the second layer (4, 4a, 4b) and the first layer (7).

4. A method for manufacturing a temperature indicator suitable for indicating a temperature of food (10) contained in package when the food is heated by microwave radiation, the indicator comprising:
- a first layer (7) arranged to change colour when heated to a temperature high enough
- a second layer (4, 4a, 4b) comprising material which absorbs microwave radiation, wherein the second layer (4, 4a, 4b) is arranged to heat the first layer (7) by absorbing microwave radiation, and
- a third layer (1) arranged to thermally insulate the second layer (4, 4a, 4b) from the package when the food (10) and the second layer (4, 4a, 4b) are heated by the microwave radiation,
wherein the method comprises selecting the composition, thickness and/or geometry of the second layer (4, 4a, 4b) so that the first layer (7) is arranged to change colour when said food is heated by the microwave radiation to a predetermined temperature different from the temperature of the second layer (4, 4a, 4b).

5. The method according to claim 4, **characterised in that** said indicator comprises an interlayer (8) between said second layer (4, 4a, 4b) and said first layer (7), wherein material, thickness and/or heat conductivity of said interlayer (8) are/is selected so as to adjust an effect of a temperature rise in the second layer (4, 4a, 4b) on said first layer (7).

6. A method for indicating a temperature of food heated by microwave radiation, the food being contained in a package such that an indicator has been fastened to the package, said indicator comprising:
- a first layer (7), arranged to change colour when heated to a temperature high enough
- a second layer (4, 4a, 4b) comprising microwave-absorbing material, wherein the second layer (4, 4a, 4b) is arranged to heat said first layer (7) by absorbing microwave radiation, and
- a third layer (1) arranged to thermally insulate the second layer (4, 4a, 4b) from the package,
the method comprising:
- heating the food (10) by microwave radiation such that the indicator is subjected to the microwave radiation, and
- monitoring a change of colour of the first layer (7).

7. The method according to claim 6, **characterised in that** said indicator comprises an interlayer (8) between said second layer (4, 4a, 4b) and said first layer (7).

8. The method according to claim 6 or 7, **characterised in that** the composition, thickness and/or geometry of the second layer (4, 4a, 4b) have been selected so that the first layer (7) is arranged to change colour when the food is heated to a second predetermined temperature different from the temperature of the second layer (4, 4a, 4b.

9. The method according to any of the claims 6 to 8, **characterised in that** the indicator is fastened to an outer surface of a package containing said food (10) by an adhesive layer (2).

## Patentansprüche

1. Kombination aus einer Packung und einem an der Packung befestigten Temperaturindikator, wobei die Packung ein Lebensmittel (10) enthält, wobei der Indikator Folgendes umfasst:
- eine erste Schicht (7), die derart angeordnet ist, dass sie die Farbe ändert, wenn sie auf eine ausreichend hohe Temperatur erwärmt wird,
**dadurch gekennzeichnet, dass** der Indikator ferner Folgendes umfasst:
- eine zweite Schicht (4, 4a, 4b), die ein Material umfasst, welches Mikrowellenstrahlung absorbiert, wobei die zweite Schicht (4, 4a, 4b) derart angeordnet ist, dass sie die erste Schicht (7) durch Absorbieren von Mikrowellenstrahlung erwärmt, und
- eine dritte Schicht (1), die derart angeordnet ist, dass sie die zweite Schicht (4, 4a, 4b) gegenüber der Packung thermisch isoliert, wenn das Lebensmittel (10) und die zweite Schicht (4, 4a, 4b) durch die Mikrowellenstrahlung erwärmt werden.

2. Indikator nach Anspruch 1, **dadurch gekennzeichnet, dass** der Indikator durch eine Klebeschicht (2) an einer Außenfläche (11) der Packung befestigt wurde.

3. Indikator nach Anspruch 1 oder 2, **dadurch gekennzeichnet, dass** der Indikator eine Zwischenschicht (8) zwischen der zweiten Schicht (4, 4a, 4b) und der ersten Schicht (7) aufweist.

4. Verfahren zur Herstellung eines Temperaturindikators, der für das Anzeigen einer Temperatur eines in einer Packung enthaltenen Lebensmittels (10) geeignet ist, wenn das Lebensmittel durch Mikrowellenstrahlung erwärmt wird, wobei der Indikator Folgendes umfasst:
- eine erste Schicht (7), die derart angeordnet ist, dass sie die Farbe ändert, wenn sie auf eine ausreichend hohe Temperatur erwärmt wird,
- eine zweite Schicht (4, 4a, 4b), die ein Material umfasst, welches Mikrowellenstrahlung absorbiert, wobei die zweite Schicht (4, 4a, 4b) derart angeordnet ist, dass sie die erste Schicht (7) durch Absorbieren von Mikrowellenstrahlung erwärmt, und
- eine dritte Schicht (1), die derart angeordnet ist, dass sie die zweite Schicht (4, 4a, 4b) gegenüber der Packung thermisch isoliert, wenn das Lebensmittel (10) und die zweite Schicht (4, 4a, 4b) durch die Mikrowellenstrahlung erwärmt werden,
wobei das Verfahren das Auswählen der Zusammensetzung, Dicke und/oder Geometrie der zweiten Schicht (4, 4a, 4b) derart umfasst, dass die erste Schicht (7) für eine Farbänderung angeordnet ist, wenn das Lebensmittel durch die Mikrowellenstrahlung auf eine vorgegebene Temperatur erwärmt wird, die von der Temperatur der zweiten Schicht (4, 4a, 4b) verschieden ist.

5. Verfahren nach Anspruch 4, **dadurch gekennzeichnet, dass** der Indikator eine Zwischenschicht (8) zwischen der zweiten Schicht (4, 4a, 4b) und der ersten Schicht (7) umfasst, wobei das Material, die Dicke und/oder die Wärmeleitfähigkeit der Zwischenschicht (8) derart ausgewählt sind/ist, dass sie/es eine Wirkung eines Temperaturanstiegs in der zweiten Schicht (4, 4a, 4b) auf die erste Schicht (7) einstellen/einstellt.

6. Verfahren zum Anzeigen einer Temperatur eines durch Mikrowellenstrahlung erwärmten Lebensmittels, wobei das Lebensmittel derart in einer Packung enthalten ist, dass ein Indikator an der Packung befestigt wurde, wobei der Indikator Folgendes umfasst:
- eine erste Schicht (7), die derart angeordnet ist, dass sie die Farbe ändert, wenn sie auf eine ausreichend hohe Temperatur erwärmt wird,
- eine zweite Schicht (4, 4a, 4b), die ein Mikrowellen absorbierendes Material umfasst, wobei die zweite Schicht (4, 4a, 4b) derart angeordnet ist, dass sie die erste Schicht (7) durch Absorbieren von Mikrowellenstrahlung erwärmt, und
- eine dritte Schicht (1), die derart angeordnet ist, dass sie die zweite Schicht (4, 4a, 4b) gegenüber der Packung thermisch isoliert,
wobei das Verfahren Folgendes umfasst:
- Erwärmen des Lebensmittels (10) durch Mikowellenstrahlung derart, dass der Indikator der Mikrowellenstrahlung ausgesetzt wird, und
- Überwachen einer Änderung der Farbe der ersten Schicht (7).

7. Verfahren nach Anspruch 6, **dadurch gekennzeichnet, dass** der Indikator eine Zwischenschicht (8) zwischen der zweiten Schicht (4, 4a, 4b) und der ersten Schicht (7) umfasst.

8. Verfahren nach Anspruch 6 oder 7, **dadurch gekennzeichnet, dass** die Zusammensetzung, Dicke und/oder Geometrie der zweiten Schicht (4, 4a, 4b) derart ausgewählt wurden, dass die erste Schicht (7) für eine Farbänderung angeordnet ist, wenn das Lebensmittel auf eine zweite vorgegebene Temperatur erwärmt wird, die von der Temperatur der zweiten Schicht (4, 4a, 4b) verschieden ist.

9. Verfahren nach irgendeinem der Ansprüche 6 bis 8, **dadurch gekennzeichnet, dass** der Indikator durch eine Klebeschicht (2) an einer Außenfläche einer das Lebensmittel (10) enthaltenden Packung befestigt wird.

## Revendications

1. Combinaison d'un emballage et d'un indicateur de température fixé à l'emballage, l'emballage contenant un aliment (10), l'indicateur comprenant :
- une première couche (7) agencée de façon à changer de couleur lorsqu'elle est chauffée à une température suffisamment élevée,
**caractérisée en ce que** l'indicateur comprend en outre :
- une deuxième couche (4, 4a, 4b) comprenant une matière qui absorbe un rayonnement de micro-ondes, dans laquelle la deuxième couche (4, 4a, 4b) est agencée de façon à chauffer ladite première couche (7) par absorption d'un rayonnement de micro-ondes, et
- une troisième couche (1) agencée de façon à isoler thermiquement la deuxième couche (4, 4a, 4b) de l'emballage lorsque l'aliment (10) et la deuxième couche (4, 4a, 4b) sont chauffés par le rayonnement de micro-ondes.

2. Indicateur selon la revendication 1, **caractérisé en ce que** l'indicateur a été fixé sur une surface extérieure (11) de l'emballage par une couche adhésive (2).

3. Indicateur selon la revendication 1 ou 2, **caractérisé en ce que** l'indicateur a une inter-couche (8) entre la deuxième couche (4, 4a, 4b) et la première couche (7).

4. Procédé de fabrication d'un indicateur de température approprié à indiquer une température d'un aliment (10) contenu dans un emballage lorsque l'aliment est chauffé par un rayonnement de micro-ondes, l'indicateur comprenant :
- une première couche (7) agencée de façon à changer de couleur lorsqu'elle est chauffée à une température suffisamment élevée,
- une deuxième couche (4, 4a, 4b) comprenant une matière qui absorbe un rayonnement de micro-ondes, dans laquelle la deuxième couche (4, 4a, 4b) est agencée de façon à chauffer ladite première couche (7) par absorption d'un rayonnement de micro-ondes, et
- une troisième couche (1) agencée de façon à isoler thermiquement la deuxième couche (4, 4a, 4b) de l'emballage lorsque l'aliment (10) et la deuxième couche (4, 4a, 4b) sont chauffés par le rayonnement de micro-ondes, dans lequel le procédé comprend la sélection de la composition, de l'épaisseur et/ou de la géométrie de la deuxième couche (4, 4a, 4b) de telle façon que la première couche (7) est agencée de façon à changer de couleur lorsque ledit aliment est chauffé par le rayonnement de micro-ondes à une température prédéterminée différente de la température de la deuxième couche (4, 4a, 4b).

5. Procédé selon la revendication 4, **caractérisé en ce que** ledit indicateur comprend une inter-couche (8) entre ladite deuxième couche (4, 4a, 4b) et ladite première couche (7), dans lequel la matière, l'épaisseur et/ou la conductivité thermique de ladite inter-couche (8) sont/est choisie(s) de façon à ajuster un effet d'un accroissement de température dans la deuxième couche (4, 4a, 4b) sur ladite première couche (7).

6. Procédé pour indiquer une température d'un aliment chauffé par un rayonnement de micro-ondes, l'aliment étant contenu dans un emballage tel qu'un indicateur a été fixé à l'emballage, ledit indicateur comprenant :
- une première couche (7) agencée de façon à changer de couleur lorsqu'elle est chauffée à une température suffisamment élevée,
- une deuxième couche (4, 4a, 4b) comprenant une matière absorbant les micro-ondes, dans laquelle la deuxième couche (4, 4a, 4b) est agencée de façon à chauffer ladite première couche (7) par absorption d'un rayonnement de micro-ondes, et
- une troisième couche (1) agencée de façon à isoler thermiquement la deuxième couche (4, 4a, 4b) de l'emballage,
le procédé comprenant :
- le chauffage de l'aliment (10) par un rayonnement de micro-ondes de telle sorte que l'indicateur est soumis au rayonnement de micro-ondes, et
- la surveillance d'un changement de couleur de la première couche (7).

7. Procédé selon la revendication 6, **caractérisé en ce que** ledit indicateur comprend une inter-couche (8) entre ladite deuxième couche (4, 4a, 4b) et ladite première couche (7).

8. Procédé selon la revendication 6 ou 7, **caractérisé en ce que** la composition, l'épaisseur et/ou la géométrie de la deuxième couche (4, 4a, 4b) ont/a été sélectionnée(s) de telle façon que la première couche (7) est agencée de façon à changer de couleur lorsque l'aliment est chauffé à une deuxième température prédéterminée différente de la température de la deuxième couche (4, 4a, 4b).

9. Procédé selon l'une quelconque des revendications 6 à 8, **caractérisé en ce que** l'indicateur est fixé sur une surface extérieure d'un emballage contenant ledit aliment (10) par une couche adhésive (2).
